# EUROPÄISCHE PATENTANMELDUNG

(11) **EP 1 796 030 A1**
(43) Veröffentlichungstag der Anmeldung: **13.06.2007**
(21) Anmeldenummer: 06025185.7
(22) Anmeldetag: 06.12.2006
(51) Int. Cl.: G06Q 20/00, G07F 17/24, G07B 15/02

(54) **Verfahren zur Abrechnung einer Leistung**

(30) Priorität: 09.12.2005 EP 05026940
(71) Anmelder: Scheidt & Bachmann Gesellschaft mit beschränkter Haftung, 41238 Mönchengladbach (DE)
(72) Erfinder: Miller, Norbert, 41063 Mönchengladbach (DE); Crynen, Norbert, 41179 Mönchengladbach (DE)
(74) Vertreter: Stenger, Watzke & Ring

(57) **Zusammenfassung**

Die Erfindung betrifft ein Verfahren zur Abrechnung bereitgestellter Leistungen, wobei zu Beginn der Bereitstellung eine tragbare Berechtigungseinheit mit einer elektronisch erfaßbaren Berechtigungsinformation erstellt und ausgegeben wird, die Berechtigungsinformation im Bereich einer Kasse zur Abwicklung von Zahlungstransaktionen aus der Berechtigungseinheit gelesen, in ein für das Kassensystem verarbeitbares Format konvertiert und zur Weiterverarbeitung durch das Kassensystem bereitgestellt wird.

## Beschreibung

Die vorliegende Erfindung betrifft ein Verfahren zur Abrechnung bereitgestellter Leistungen sowie eine hierfür vorgesehene Vorrichtung.

Für das Nutzen von Leistungen sind im geschäftlichen Verkehr im wesentlichen zwei Verfahren verbreitet. Gemäß einem ersten Verfahren wird zu Beginn der Bereitstellung der Leistung von einem Nutzer gegen Bezahlung ein Berechtigungsausweis erworben, mit dem er die gewünschte Leistung in Anspruch nehmen kann. Mit dem Berechtigungsausweis erhält er Zutritt über ein Zugangskontrollsystem oder die gewünschte Leistung wird direkt veranlasst. Bei Beendigung der Dienstleistung ist der Berechtigungsausweis entweder erneut wieder vorzulegen oder er wird sofort einbehalten. Derartige Systeme sind beispielsweise bei Schwimmbädern, Sporteinrichtungen und kostenpflichtigen Parkplätzen bekannt.

Ein ebenfalls bei Parkplätzen verbreitetes zweites Verfahren sieht vor, dass bei einer Zugangskontrollstelle ein Berechtigungsausweis an den Nutzer übergeben wird, der bei Verlassen des Parkbereichs zuvor an einer Zahlstelle mit einer Freigabe zu versehen ist, indem das entsprechende Entgelt an der Zahlstelle entrichtet wird, und dann zum Verlassen des Parkgeländes in den dafür vorgesehenen Ausgangskontrollautomaten eingegeben wird. Dieser gibt bei Vorliegen der Freigabe den Ausgang frei. Die Zahlstelle ist oftmals in Form eines Kassenautomaten vorgesehen.

Insbesondere im Einzelhandel, beispielsweise bei Kaufhäusern mit einem angegliederten Parkbereich oder dergleichen, ist es wünschenswert, für Kunden eine Möglichkeit zu eröffnen, zu reduzierten Kosten beziehungsweise kostenfrei einen Parkplatz bereitzustellen. Hierdurch soll gewährleistet werden, dass die Parkplätze vorzugsweise von den tatsächlichen Kunden in Anspruch genommen werden. Dritte, die den Parkbereich nicht zum Zwecke des Kaufs benutzen, sollen dagegen mit einem entsprechenden Parkentgelt belegt werden.

Hierzu ist es beispielsweise bekannt, die mit dem Zugang zum Parkbereich an den Nutzer übergebenen Berechtigungsausweise beim Kauf von Waren mit einer Kennzeichnung zu versehen, die einen Bonus beziehungsweise eine Freigabe beinhaltet, so dass der Kunde beim Verlassen des Parkbereichs diesen ohne Entgelt oder durch Zahlung eines reduzierten Entgelts verlassen kann. Bekannt sind Systeme, bei denen Papierberechtigungsausweise mit einer Perforierung versehen werden oder in anderer mechanischer Weise verändert werden. Solche Systeme sind jedoch anfällig für Manipulationen. Andere Bonussysteme dagegen erfordern einen hohen Anpassungsaufwand bezüglich vorhandener Kassensysteme und dergleichen und sind deshalb unter anderem mit hohen Kosten verbunden. Ein Kassensystem im Sinne der vorliegenden Erfindung ist ein System zur Durchführung von Zahlungstransaktionen, beispielsweise im Einzelhandel, mit einer oder mehreren Kassen, die in der Regel manuell oder halbautomatisch bedient werden können.

Auf jeden Fall ist es erforderlich, daß der Nutzer an einer entsprechend für diese Leistung vorgesehenen Zahlstelle eine Freigabe erwirkt, so daß er den Parkbereich wieder mit seinem Fahrzeug verlassen kann. Oft sind solche Zahlstellen als separate Automaten ausgebildet, die das Zahlungsmittel in passender Form benötigen oder nicht wechseln können. Damit ist für die Nutzer ein zusätzlicher Aufwand für das Aufsuchen der Automaten und oftmals für das Bereitstellen passender Zahlungsbeträge verbunden. Es wäre demzufolge wünschenswert, die Abrechnung der Leistung mit einer Zahlungstransaktion bei einem Einkauf oder dergleichen verbinden zu können, um für den Nutzer und den Bereitsteller der Leistung eine Vereinfachung zu erreichen.

Es ist deshalb die **Aufgabe** der vorliegenden Erfindung, ein gattungsgemäßes Verfahren zur Abrechnung einer Leistung dahingehend weiterzubilden, dass es mit einfachem Aufwand und geringen Kosten in vorhandene Systeme eingegliedert werden kann.

Diese Aufgabe wird durch ein Verfahren zur Abrechnung einer Leistung **gelöst**, wobei zu Beginn der Bereitstellung eine tragbare Berechtigungseinheit mit einer elektronisch erfaßbaren Berechtigungsinformation erstellt und ausgegeben wird, die Berechtigungsinformation im Bereich einer Kasse zur Abwicklung von Zahlungstransaktionen aus der Berechtigungseinheit gelesen, in ein für das Kassensystem verarbeitbares Format konvertiert und zur Weiterverarbeitung durch das Kassensystem bereitgestellt wird.

Erstmals ist es somit möglich, mit geringfügigen Anpassungen an einem vorhandenen Kassensystem ein Bonussystem für die Bereitstellung einer Leistung zu realisieren. Darüber hinaus erlaubt das erfindungsgemäße Verfahren, dass die verwendeten Einheiten nicht permanent mit einer Zentrale in Kommunikationsverbindung stehen müssen, das heißt, sie können als "Stand-alone-Gerät" zum Einsatz kommen. Hierdurch kann Montage- und Installationsaufwand erheblich reduziert werden. Das erfindungsgemäße Verfahren erlaubt es, im einfachsten Fall bereits vorhandene Kassen ohne Aufrüstungen oder technische Änderungen nutzen zu können. Das Kassensystem kann aus einer einzelnen Kasse bestehen, es kann aber auch eine Vielzahl von Kassen und weiterer Einrichtungen für deren Betrieb umfassen. Das Kassensystem kann ein Netzwerk umfassen, mit welchem die einzelnen Kassen informationstechnisch vernetzt sind. Das erfindungsgemäße Verfahren erlaubt ferner eine Verbesserung bezüglich der Sicherheit gegen unerlaubte Manipulation sowie eine sichere, fehlerfreie Erfassung. Mit dem erfindungsgemäßen Verfahren kann erreicht werden, daß die Zahlungstransaktion zur Abrechnung der Leistung zum Beispiel mit einer Zahlungstransaktion eines Einkaufs des Nutzers verbunden werden kann. Natürlich kann die Zahlungstransaktion auch für die Nutzung eines Schwimmbads, einer Sauna, den Zutritt zu einem Kino oder dergleichen oder darüber hinaus auch in der Gastronomie oder Hotellerie vorgesehen sein. Die Ermittlung einer abrechnungsrelevanten Leistung kann beispielsweise anhand der Berechtigungsinformation erfolgen. Die Abrechnung der Leistung erfolgt beispielsweise als eigener Rechnungsposten in der Quittung. Der Nutzer kann sich die separate Abrechnung an einer gesonderten Zahlstelle ersparen und mit einer gemeinsamen Zahlungstransaktion neben dem Einkauf auch die Leistung abrechnen. Eine zeitraubende und umständliche Abrechnung an einer separaten Zahlstelle, insbesondere Automaten mit den hierfür symptomatischen Problemen, kann vermieden werden. Für den Bereitsteller der Leistung entsteht der Vorteil, daß eine separate Zahlungstransaktion für die Leistung und der hiermit verbundene Aufwand an Personal, Automaten und Wartung eingespart werden kann. Die Weiterverarbeitung kann zum Beispiel in einem elektronischen Einlesen in das Kassensystem bestehen, wobei das Kassensystem selbst eine zusätzliche Weiterverarbeitung vornehmen kann.

Es kann beispielsweise vorgesehen sein, daß der Berechtigungsausweis über einen RFID-Chip verfügt. Dieser wird bei der Ausgabe mit einer entsprechenden Berechtigungsinformation versehen. Im Bereich der Kasse kann beispielsweise vorgesehen sein, daß eine Einrichtung zur Herstellung einer Nahfunkverbindung zu dem RFID-Chip eine Funkverbindung herstellt, um die Berechtigungsinformation auslesen zu können. Vorzugsweise kann vorgesehen sein, daß die Berechtigungseinheit erst dann aktiviert wird, wenn sie von außerhalb mit Energie versorgt wird, so beispielsweise durch eine Energieversorgung über die Schnittstelle beziehungsweise über die Nahfunkverbindung. Dazu kann beispielsweise vorgesehen sein, daß die Berechtigungseinheit in einen vorgebbaren Bereich gebracht wird, in dem sie über eine leitungsgebundene Schnittstelle oder auch über eine drahtlose Nahfunkverbindung mit der Kasse in Kommunikation treten kann. Eine Lesbarkeit im optischen Sinne ist nicht erforderlich, so daß das RFID-Etikett auch innerhalb einer Verpackung oder dergleichen erfaßt werden kann. Derartige Systeme arbeiten beispielsweise mit elektromagnetischen Wellen bei einer Frequenz von etwa 125 kHz oder auch etwa 868 MHz beziehungsweise etwa 2,5 GHz.

Darüber hinaus erlaubt das erfindungsgemäße Verfahren eine einfache Realisierung einer Nachlösemöglichkeit. Entschließt sich der Nutzer, die Leistung länger als ursprünglich geplant in Anspruch zu nehmen, kann er jederzeit, auch zum Beispiel in Verbindung mit einem weiteren Einkauf beispielsweise in einer Cafeteria oder ähnlichem, nachlösen, indem er eine erneute Zahlungstransaktion vornimmt.

Die Bereitstellung einer Leistung kann nicht nur in der Gewährung einer Parkberechtigung liegen, sondern sie kann darüber hinaus auch in beliebigen anderen Dienstleistungen bestehen, so beispielsweise der Berechtigung der Benutzung einer Sauna eines Schwimmbadkomplexes, der Berechtigung der Benutzung eines Sportbereichs in einem Sportpark und dergleichen mehr. Die Berechtigungseinheit kann beispielsweise in einem Papierausweis oder einem Ausweis in Form einer Scheckkarte, Münze, Marke oder dergleichen gebildet sein. Die Berechtigungseinheit weist eine elektronisch lesbare Berechtigungsinformation auf. Die Berechtigungsinformation kann beispielsweise in Form eines Barcodes, insbesondere auch eines EAN-Barcodes und/oder eines alphanumerischen Codes vorliegen. Dieser kann auf dem Papierausweis oder dergleichen aufgedruckt sein. Vorzugsweise ist die Berechtigungsinformation in digitaler, insbesondere binärer, Form gespeichert und erfaßbar. Die Speichereinheit kann beispielsweise in Form eines Magnetstreifens, eines elektronischen Speichers, eines optischen Speichers oder dergleichen gebildet sein. Die Berechtigungsinformation kann aus der Berechtigungseinheit ausgelesen werden mit geeigneten Lesegeräten, die an die Speichereinheit angepasst sind. Bei Verwendung beispielsweise eines Magnetstreifens als Speichereinheit wird deshalb ein Magnetkartenleser eingesetzt. Die Berechtigungsinformation wird zum Einlesen in ein Kassensystem bereitgestellt, wobei die Berechtigungsinformation in ein für das Kassensystem lesbares Format konvertiert wird. Das Format kann beispielsweise ein von handelsüblichen Kassen verarbeitbares, allgemeingültiges Artikelkennzeichnungsformat sein. Dies kann beispielsweise in Form eines Codes erfolgen, der manuell oder elektronisch in das Kassensystem übertragbar ist. Mit der Bereitstellung oder auch danach kann eine Freigabeinformation erzeugt werden. Diese kann zum Beispiel in einer weiteren, ergänzenden und/oder abändernden Berechtigungsinformation bestehen. Die Freigabe kann an Bedingungen geknüpft sein, beispielsweise eine Frist, einen Zeitraum, eine bestimmte Ausfahrt eines Parkbereichs oder dergleichen.

Ferner kann das erfindungsgemäße Verfahren vorsehen, dass zum Erzeugen der Freigabeinformation die Berechtigungsinformation geändert, gelöscht und/oder eine weitere Information hinzugefügt wird. Das kann bedeuten, dass dem Code eine zusätzliche Information hinzugefügt wird, beziehungsweise eine vorhandene Information beziehungsweise ein Teil davon durch eine neue Information ersetzt wird. Diese geänderte Berechtigungsinformation ist vorzugsweise dazu vorgesehen, eine nachträgliche Freigabe beziehungsweise einen Bonus zu bewirken. Die Änderung kann auch in einer Teillöschung bestehen. Bezogen auf ein Parksystem kann beispielsweise vorgesehen sein, dass beim Verlassen des Parkbereichs die Berechtigungsinformation in ihrer geänderten Form eine Freigabe bei der Ausfahrtkontrolle bewirkt. Natürlich kann auch vorgesehen sein, dass eine weitere Information hinzugefügt wird. Dies ist beispielsweise bei Berechtigungsausweisen aus Papier vorteilhaft, bei denen ein zusätzlicher Code aufgedruckt wird, weil bekanntermaßen eine Änderung des Berechtigungscodes nur mit großem technischen Aufwand realisierbar wäre.

Damit die Sicherheit gegen unberechtigte Manipulation und dergleichen verbessert werden kann, wird vorgeschlagen, dass die Berechtigungseinheit bei Übergabe an den Nutzer mit der Berechtigungsinformation versehen wird. Die Berechtigungsinformation kann folglich in aktueller Form erzeugt werden, so dass Manipulationsmöglichkeiten deutlich erschwert werden. Darüber hinaus kann erreicht werden, dass unberechtigte Dritte, die in den Besitz einer Berechtigungseinheit gelangt sind, diese nicht bestimmungsgemäß benutzen können. Dies wird erst dann möglich, wenn die Berechtigungseinheit in bestimmungsgemäßer Weise übergeben worden ist.

Es wird vorgeschlagen, dass die Freigabeinformation durch an einen Quittungsdrucker der Kasse gesandte Daten erzeugt wird. Auf diese Weise kann erreicht werden, dass ein manueller Eingriff zur Erzeugung der Freigabeinformation vermieden werden kann. Dies hat nicht nur Vorteile bezüglich der Sicherheit und der Manipulationsmöglichkeit, sondern auch die Zuverlässigkeit kann durch Vermeidung von Eingabefehlern verbessert werden. Bezüglich einer Realisierung kann beispielsweise vorgesehen sein, dass die Datenleitung des Quittungsdruckers der Kasse über eine Schnittstelle ausgelesen wird und sobald eine vorgebbare Druckinformation über die Schnittstelle gelesen werden kann, automatisch die Freigabeinformation erzeugt wird. Eine solche Information könnte beispielsweise der Druckbefehl für das Wort "Parken" oder "Parkentgelt" gebildet sein. Zur Nachrüstung ist deshalb nur ein geringer Aufwand erforderlich.

Darüber hinaus wird vorgeschlagen, dass die Freigabeinformation durch Detektieren des Einlesens in das Kassensystem erzeugt wird. So kann beispielsweise vorgesehen sein, dass mit einem Sensor das Einlesen in das Kassensystem beziehungsweise in die Kasse detektiert wird. Die Detektion erzeugt die Freigabeinformation. Auch hier kann eine manuelle Eingabe vermieden werden. Darüber hinaus kann ein Eingriff in das bestehende Kassensystem ebenfalls vermieden werden. Das Detektieren kann beispielsweise optisch, kapazitiv, induktiv oder dergleichen erfolgen.

In einer Weiterbildung wird vorgeschlagen, dass die Berechtigungsinformation und/oder die geänderte Berechtigungsinformation gespeichert werden. Dies ermöglicht es, Informationen über die Bereitstellung der Leistung für eine spätere Auswertung bereitzuhalten. So kann beispielsweise vorgesehen sein, dass den Gewerbetreibenden eines gemeinschaftlich betriebenen Kaufhauses anteilig die Kosten des Betriebs eines gemeinschaftlichen Parkbereichs im Rahmen der ihnen zuzuordnenden Nutzung durch eigene Kunden in Rechnung gestellt werden kann.

Zu diesem Zweck schlägt die Erfindung vor, dass die Berechtigungsinformation eine Betreiberkennung, eine Anlagenkennung, einen Abrechnungscode und/oder einen oder mehrere Zeitcodes umfasst. Dies ermöglicht nicht nur die Zuordnung der Berechtigungseinheit zu einer bestimmten Anlage, sondern es ermöglicht darüber hinaus die Bereitstellung der Leistung an eine Zeit zu koppeln sowie einzelnen Betreibern zuzuordnen. Ferner kann eine zeitliche Beschränkung der Bereitstellung der Leistung erreicht werden, indem der Zeitcode in geeigneter Weise ausgewertet wird. So kann beispielsweise eine Verfallszeit vorgesehen sein.

In einer Weiterbildung der vorliegenden Erfindung wird vorgeschlagen, dass die Bereitstellung der Leistung mit der Übergabe der Berechtigungseinheit an den Nutzer aktiviert wird. Dieses Verfahren erweist sich insbesondere bei Massendienstleistungen, wie sie bei Parkbereichen und dergleichen vorkommen, als vorteilhaft, indem die Berechtigungseinheit beim Zutritt an den Nutzer übergeben wird und dieser zugleich in den Genuss der Leistung gelangt, beispielsweise indem ihm Zufahrt zu einem Parkbereich gewährt wird. Mit der Übergabe der Berechtigungseinheit wird die Bereitstellung der Leistung sofort aktiviert.

In einer vorteilhaften Weiterbildung der vorliegenden Erfindung wird vorgeschlagen, dass die Berechtigungsinformation als Barcode angezeigt und/oder ausgedruckt wird. So besteht auf einfache Weise die Möglichkeit, die Berechtigungsinformation in das Kassensystem einzulesen, beispielsweise mit einem geeigneten Lesegerät für einen Barcode, der üblicherweise Bestandteil eines solchen Kassensystems ist. Vorzugsweise ist der Barcode ein EAN-Barcode. Bei einem Papierausweis ist der Barcode vorzugsweise durch einen Aufdruck gebildet. Ein weitgehend fehlerfreies Einlesen der Berechtigungsinformation in das Kassensystem kann erreicht werden.

Es wird ferner vorgeschlagen, dass als Berechtigungsinformation ein alphanumerischer Code und/oder ein Barcode auf den Berechtigungsausweis gedruckt wird. Diese Ausgestaltung erlaubt es, die Erfindung in Verbindung mit konventionellen Papierausweisen zu verwenden. Insbesondere eignet sich diese Ausgestaltung dazu, ohne Eingriff in vorhandene Kassensysteme verwendet zu werden. Vorzugsweise ist deshalb der Barcode ein EAN-Barcode, wie er von handelsüblichen Kassensysteme verarbeitet werden kann.

In einer Weiterbildung wird vorgeschlagen, dass die Berechtigungsinformation manuell geändert wird. So kann beispielsweise vorgesehen sein, dass mittels eines geeigneten Schreib-/Lesegeräts mit einer manuellen Eingabeeinheit die Berechtigungsinformation von Hand geändert wird.

Darüber hinaus kann jedoch auch vorgesehen sein, dass die Berechtigungsinformation automatisch geändert wird. So können beispielsweise Fehler bei der Änderung der Berechtigungsinformationen und Manipulationen reduziert werden. Die Änderung der Berechtigungsinformation kann beispielsweise durch das Kassensystem nach erfolgreichem Einlesen der Berechtigungsinformation veranlasst werden. Hierzu kann beispielsweise das Schreib-/Lesegerät durch ein Kommunikationssignal zur Änderung der Berechtigungsinformation veranlasst werden. Die Änderung kann beispielsweise darin bestehen, dass ein in der Berechtigungsinformation enthaltener Zeitcode durch einen aktuellen Zeitcode überschrieben wird. Es kann aber auch vorgesehen sein, dass ein weiterer Zeitcode zur Berechtigungsinformation lediglich hinzugefügt wird. Vorzugsweise umfasst das Ändern der Berechtigungsinformation jedoch ein Ändern des Zeitcodes. Das Ändern der Berechtigungsinformation kann ferner von einer Prüfung der Berechtigungsinformation abhängig gemacht werden.

In einer Weiterbildung wird vorgeschlagen, dass die geänderte Berechtigungsinformation als alphanumerischer Code und/oder als Barcode auf den Berechtigungsausweis gedruckt wird. Auf diese Weise kann beispielsweise ein weiterer Barcode auf den Berechtigungsausweis gedruckt werden, der durch das Kassensystem ausgewertet werden kann.

Ferner wird vorgeschlagen, dass für den alphanumerischen Code und/oder den Barcode sowie für den geänderten alphanumerischen Code und/oder Barcode gleiche und/oder unterschiedliche Codierungen verwendet werden. So kann vorgesehen sein, dass lediglich die geänderte Berechtigungsinformation durch einen EAN-Barcode gebildet ist, so dass weitere Barcodes von herkömmlichen Kassensystemen ignoriert werden. Dies erlaubt eine einfache Kombination der Erfindung mit konventionellen Kassensystemen, ohne dass in diese ein Eingriff erforderlich wäre. Diese Ausgestaltung eignet sich deshalb hervorragend für die Nachrüstung in bereits vorhandenen Systemen.

Mit Vorteil wird darüber hinaus vorgeschlagen; dass als Leistung eine Parkberechtigung verwendet wird. Eine deutliche Verbesserung der Nutzung eines vorhandenen Parkbereichs kann mit einfachen Mitteln erreicht werden. So besteht die Möglichkeit, ein vorhandenes Kassensystem mit einem System, welches das erfindungsgemäße Verfahren ausführen kann, zu erweitern, um den Parkbereich in wunschgemäßer Weise optimiert nutzen zu können.

Weiterhin wird vorgeschlagen, dass das Ändern der Berechtigungsinformation durch das Kassensystem veranlasst wird. Hierdurch kann erreicht werden, dass das Ändern der Berechtigungsinformation erst dann veranlasst wird, wenn das Kassensystem eine gültige Berechtigungsinformation erhalten hat. Die Gültigkeit kann beispielsweise an ein Zeitfenster oder auch an eine Anlagen- oder Betreiberidentifikation gekoppelt sein. Darüber hinaus kann vorgesehen sein, dass das Ändern der Berechtigungsinformation über das Kassensystem von einer Zentrale aus gesteuert werden kann.

In einer Weiterbildung wird vorgeschlagen, dass die angezeigte Berechtigungsinformation mittels eines Scanners in das Kassensystem eingelesen wird. Heutzutage verfügen Kassensysteme in der Regel auch über Scanner, mit denen beispielsweise Barcodes, insbesondere EAN-Barcodes, eingelesen werden können. Dies ermöglicht eine sichere kostengünstige Lösung bezüglich des Einlesens der Berechtigungsinformation in das Kassensystem. Fehler und Manipulationsmöglichkeiten können weiter reduziert werden.

Ferner wird vorgeschlagen, dass die geänderte Berechtigungsinformation eine Freigabe und/oder einen Bonus für die Bereitstellung der Leistung umfasst. So kann beispielsweise vorgesehen sein, dass, im Falle einer Parkberechtigung als Leistung, eine Freigabe automatisch generiert wird, so dass ein Kunde bei Verlassen des Parkbereichs nicht zuvor einen Kassenautomat aufsuchen muss. Eine kundenfreundliche Vereinfachung bezüglich einer Parkberechtigung kann erreicht werden. Darüber hinaus kann auch vorgesehen sein, dass die Änderung der Berechtigungsinformation einen Bonus umfasst, mit dem beispielsweise eine weitere Leistung in Anspruch genommen werden kann.

In einer Weiterbildung wird vorgeschlagen, dass die Bereitstellung der Leistung in zeitlichem Zusammenhang mit Beendigung der Bereitstellung abgerechnet wird. So kann beispielsweise vorgesehen sein, dass im Falle einer Benutzung eines Parkbereichs ein reduziertes Entgelt für die Nutzung des Parkbereichs zu entrichten ist. Die Abrechnung am Ende der Bereitstellung der Leistung erlaubt es darüber hinaus, die tatsächlich genutzte Leistung in Rechnung zu stellen. Ein Kunde profitiert somit davon, dass er nur den Anteil an Leistung bezahlt, den er auch tatsächlich in Anspruch genommen hat.

Darüber hinaus wird vorgeschlagen, dass die Berechtigungseinheit nach Beendigung der Bereitstellung der Leistung vom Nutzer zurückgegeben wird. Auf diese Weise besteht die Möglichkeit, die Berechtigungseinheiten einer mehrfachen Nutzung zuzuführen. Dies spart Ressourcen und Kosten. Darüber hinaus wird vermieden, dass nicht mehr benötigte Berechtigungseinheiten vom Nutzer nicht sachgerecht entsorgt werden, beispielsweise einfach weggeworfen werden.

Mit der Erfindung wird ferner eine Vorrichtung zum Ändern der Berechtigungsinformation einer Berechtigungseinheit vorgeschlagen, die eine Schreib-/Leseeinheit, eine Erfassungseinheit für die Berechtigungsinformation, eine Kommunikationseinheit sowie eine Änderungseinheit aufweist. Mit der Schreib-/Leseeinheit kann die Erfassungseinheit mit der Berechtigungseinheit in Kommunikationsverbindung treten und die Berechtigungsinformation auslesen. Diese kann dann vorteilhaft über die Kommunikationseinheit dem Kassensystem bereitgestellt werden. Mit der Änderungseinheit besteht die Möglichkeit, über die Schreib-/Leseeinheit die Berechtigungsinformation in bestimmungsgemäßer Weise zu ändern. Die Änderungseinheit kann hierzu beispielsweise mit der Kommunikationseinheit in Verbindung stehen oder sie kann eine Eingabeeinheit aufweisen, um eine manuelle Änderung der Berechtigungsinformation zu ermöglichen. Vorteilhaft kann die Vorrichtung unabhängig von vorhandenen Systemen und Einrichtung betrieben werden.

Es wird vorgeschlagen, dass die Kommunikationseinheit eine Anzeigeeinheit aufweist. Dies ermöglicht es, die Berechtigungsinformation in optischer Weise darzustellen. Die Anzeigeeinheit kann hierzu als LCD-Anzeigeeinheit, alpha-numerische Anzeigeeinheit oder dergleichen ausgebildet sein.

Ferner wird vorgeschlagen, dass das Kassensystem einen Scanner aufweist. Dies ermöglicht es beispielsweise, wenn die Berechtigungsinformation auf der Anzeigeeinheit mittels eines EAN-Barcodes dargestellt wird, diesen mit dem Scanner direkt in das Kassensystem einzulesen. Erforderliche Systemanpassungen können sehr gering ausfallen und darüber hinaus kann eine galvanische Verbindung zwischen Kassensystem und Vorrichtung vermieden werden. Die Zuverlässigkeit des Systems kann erhöht werden. Die Anzeigeeinheit ist für diese Ausgestaltung vorzugsweise zur graphischen Darstellung geeignet.

Weiterhin wird vorgeschlagen, dass die Vorrichtung eine Zeituhr aufweist. Hierdurch kann erreicht werden, dass beispielsweise ein vorhandener Zeitcode in der Berechtigungsinformation durch einen aktuellen Zeitcode ersetzt wird, um auf diese Weise einen Bonus für den Nutzer zu generieren. So kann beispielsweise vorgesehen sein, dass aus dem ursprünglichen Zeitcode und dem aktuellen Zeitcode eine Zeitdifferenz ermittelt wird. Diese Differenz kann beispielsweise als EAN-Barcode auf dem Display angezeigt werden.

Weiterhin wird vorgeschlagen, dass die Vorrichtung eine Betätigungseinheit aufweist. Diese kann beispielsweise durch eine Taste gebildet sein, die manuell von einem Bediener betätigt wird, um die Berechtigungsinformationsänderung einzuleiten.

Ferner wird vorgeschlagen, dass die Vorrichtung eine Speichereinheit aufweist, damit die Daten für eine spätere Auswertung gespeichert werden können. Hierzu wird ferner vorgeschlagen, dass eine Kommunikationsschnittstelle vorgesehen ist, die zumindest zeitweise mit einer Zentrale in Kommunikationsverbindung treten kann, um die Daten an die Zentrale zu übertragen. Darüber hinaus besteht natürlich die Möglichkeit, die Vorrichtung von der Zentrale aus mit neuen Steuerungsdaten und dergleichen zu versehen. Es kann auch vorgesehen sein, dass die Zentrale die bestimmungsgemäße Funktion der Vorrichtung aus der Entfernung überprüfen kann.

Darüber hinaus wird vorgeschlagen, dass die Vorrichtung eine weitere Kommunikationsschnittstelle aufweist. Mit dieser kann die Vorrichtung in Kommunikation mit dem Kassensystem treten. Diese Kommunikationsschnittstelle kann beispielsweise eine Nahfunkeinheit, eine Ultraschalleinheit, eine Infraroteinheit oder dergleichen umfassen.

In einer Ausgestaltung kann beispielsweise vorgesehen sein, dass die Kasse des Kassensystems zur Registrierung von mit RFID-Etiketten versehenen Waren geeignet ist. Um ein angepaßtes, geeignetes Einlesen der Berechtigungsinformation erreichen zu können, wird vorgeschlagen, dass die Vorrichtung eine Einheit aufweist, die von der Kasse des Kassensystems wie ein RFID-Etikett erfasst werden kann. Die Einheit umfasst vorzugsweise eine Sende-/Empfangseinheit, die in äquivalenter Weise wie ein RFID-Etikett mit der Kasse in Kommunikationsverbindung treten kann. Die Zuverlässigkeit kann weiter erhöht werden.

In einer Weiterbildung wird vorgeschlagen, dass die Vorrichtung einen EAN-Timer aufweist. Dies ermöglicht vorteilhaft, eine Differenz zwischen dem Zeitcode in der Berechtigungsinformation und der aktuellen Zeit zu bilden. Mit dieser Differenz kann aus einer Rastertabelle oder einem entsprechenden Algorithmus ein entsprechender EAN-Barcode ermittelt werden. Die Rastertabelle kann in Zeitschritte unterteilt werden, welche zum Beispiel in 5, 15 oder 30 Minuten gestaffelt werden. Der entsprechende EAN-Barcode wird auf der Anzeigeeinheit dargestellt. Eine weitere Vereinfachung der Anpassung an das Kassensystem kann erreicht werden.

Um die Freigabeinformation automatisch, das heißt ohne manuellen Zugriff beziehungsweise Eingriff erzeugen zu können, wird ferner vorgeschlagen, dass die Vorrichtung einen Sensor zur Detektion des Einlesens der Berechtigungsinformation in das Kassensystem aufweist. Im Falle der Verwendung eines Scanners zum Einlesen kann beispielsweise der Sensor durch eine Photozelle, einen Photowiderstand, eine Photodiode, einen Phototransistor oder dergleichen gebildet sein, der vorzugsweise selektiv auf den Scanner angepasst ist. Wird beispielsweise der Barcode von der Anzeigeeinheit mittels des Scanners eingescannt, detektiert zugleich der Sensor durch das vom Scanner ausgesandte Licht den Einscan-Vorgang, woraufhin die Erzeugung der Freigabeinformation veranlasst werden kann. Natürlich können auch andere geeignete Detektionsmöglichkeiten vorgesehen sein, die beispielsweise auf kapazitiver oder induktiver Basis beruhen. So kann der Scanner beispielsweise auch einen oder mehrere geeignete Magneten enthalten, die mittels des Sensors detektiert werden können. In diesem Fall kann der Sensor vorteilhaft durch einen Hall-Sensor oder auch einen anderen geeigneten Sensor zur Detektion magnetischer Feldstärken gebildet sein.

In einer weiteren Ausgestaltung wird vorgeschlagen, dass die Vorrichtung kommunikationstechnisch zwischen dem Scanner und der Kasse angeordnet ist. Die Vorrichtung stellt somit nicht nur eine Kommunikationsverbindung zwischen dem Scanner und der Kasse her, sondern sie ist darüber hinaus geeignet, die Kommunikationssignale mitzulesen. Wird ein Kommunikationssignal vom Scanner erkannt, welches dem eingescannten Barcode entspricht, der wiederum der Berechtigungsinformation entspricht, so kann die Erzeugung einer Freigabeinformation veranlasst werden. Dieser Eingriff in das Kassensystem dürfte in der Regel mit geringem Aufwand verbunden sein, da üblicherweise die Scanner über Steckverbindungen mit der Kasse des Kassensystems verbunden sind. Mit geringem Aufwand kann ein Einschleifen der Vorrichtung erreicht werden.

Ferner wird vorgeschlagen, dass die Vorrichtung eine Transporteinheit aufweist. Mit der Transporteinheit kann der Berechtigungsausweis zu einem Lese- und/oder Schreibkopf geführt werden. Nach einem Lesen bzw. Beschreiben des Berechtigungsausweises kann die Transporteinheit den Berechtigungsausweis wieder in einen Zugriffsbereich des Nutzers fördern. Darüber hinaus kann mit der Transporteinheit eine Bewegung des Berechtigungsausweises in einer vorgebbaren Geschwindigkeit erreicht werden, so dass beispielsweise Magnetstreifen und dergleichen vorschriftsmäßig behandelt werden können. Die Transporteinheit kann für einen unidirektionalen als auch für einen bidirektionalen, insbesondere für einen reversiblen, Transport des Berechtigungsausweises vorgesehen sein. Sie kann Förderbänder, Transportwalzen und dergleichen aufweisen.

In einer Weiterbildung wird vorgeschlagen, dass die Transporteinheit einen Positionssensor aufweist. Dieser erlaubt es, eine vorgebbare Position des Berechtigungsausweises innerhalb der Transporteinheit festzustellen und ein entsprechendes Signal zu erzeugen. Der Positionssensor kann beispielsweise elektromechanischer Natur sein, er kann darüber hinaus aber auch optisch, kapazitiv oder dergleichen ausgebildet sein.

In einer weiteren Ausgestaltung wird vorgeschlagen, dass die Vorrichtung eine Druckeinheit aufweist. Diese ermöglicht es, eine Uhrzeit, einen Zahlencode und/oder einen Barcode oder dergleichen auf den Berechtigungsausweis auszudrucken. Darüber hinaus kann die Druckeinheit auch zum Bedrucken einer Quittung vorgesehen sein. Die Druckeinheit kann beispielsweise als Tintenstrahldruckeinheit, als Laserdruckeinheit, als Thermodruckeinheit oder dergleichen ausgebildet sein.

Darüber hinaus wird vorgeschlagen, dass die Vorrichtung eine Energieversorgungseinheit aufweist. Diese kann durch ein Netzteil gebildet sein, welches die Vorrichtung aus einer öffentlichen Energieversorgung mit Energie versorgt. Daneben und/oder zusätzlich können auch Batterien, Akkumulatoren, Solarzellen und dergleichen vorgesehen sein, um die Vorrichtung mit Energie zu versorgen. Mit diesen kann erreicht werden, dass die Vorrichtung hinsichtlich der Energieversorgung unabhängig von einer öffentlichen Energieversorgung betrieben werden kann.

Weiterhin wird vorgeschlagen, dass die Vorrichtung eine Rechnereinheit aufweist. Die Rechnereinheit erlaubt es, aus dem Berechtigungsausweis ausgelesene Daten zu verarbeiten und gegebenenfalls neue Daten dem Berechtigungsausweis hinzuzufügen. Dies kann beispielsweise durch Ändern der Daten und/oder auch durch Hinzufügen neuer Daten erfolgen. Die Rechnereinheit kann durch einen konventionellen Mikroprozessor gebildet sein.

Weitere Vorteile und Merkmale sind der folgenden Beschreibung eines Ausführungsbeispiels zu entnehmen. Im wesentlichen gleichbleibende Bauteile sind mit den gleichen Bezugszeichen bezeichnet. Die Zeichnungen sind Schemazeichnungen und dienen lediglich der Erläuterung des folgenden Ausführungsbeispiels.

Es zeigen:
- Fig. 1: die Anwendung des erfindungsgemäßen Verfahrens auf einen Parkbereich,
- Fig. 2: eine alternative Ausgestaltung des erfindungsgemäßen Verfahrens mit einem zwischen Scanner und Kasse eingeschleiften Kopplungsmodul,
- Fig. 3: schematisch einen weiteren erfindungsgemäßen Verfahrensablauf,
- Fig. 4: schematisch eine Erzeugung eines EAN-Codes,
- Fig. 5: einen Berechtigungsausweis gemäß der vorliegenden Erfindung,
- Fig. 6: schematisch ein weiteres Kopplungsmodul gemäß der Erfindung und
- Fig. 7: schematisch einen Schaltplan des Kopplungsmoduls in Fig. 6.

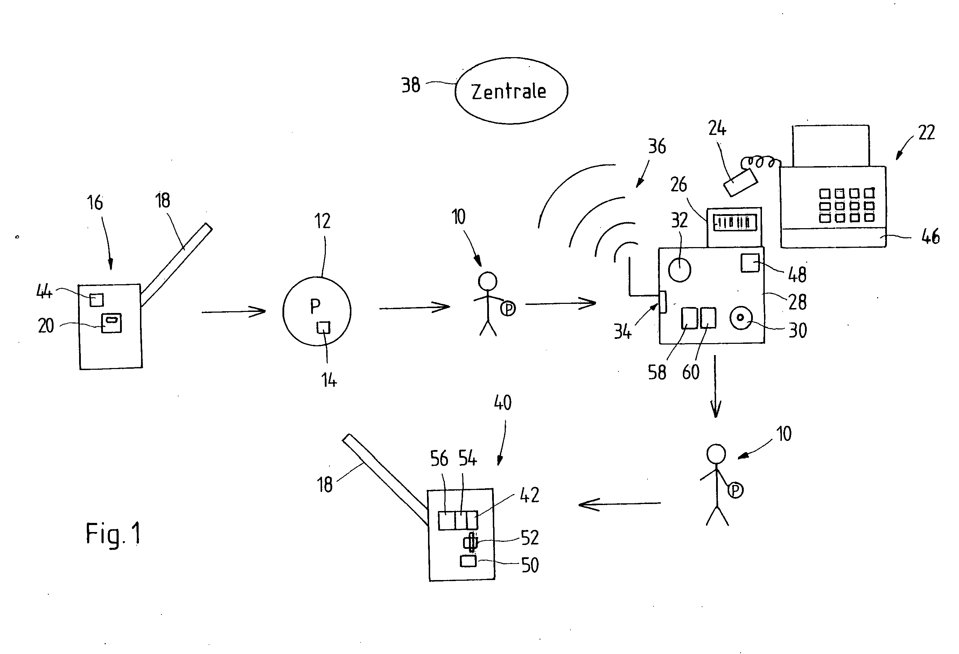

Fig. 1 zeigt eine Zufahrtschrankeneinheit 16 mit einer schwenkbaren Schranke 18 sowie eine Ausgabeeinheit 20 für Transpondermünzen 12, die die tragbare Berechtigungseinheit darstellen. Die Transpondermünzen 12 weisen einen Transponder 14 auf, in dem die Berechtigungsinformation gespeichert ist.

Ein Nutzer 10, der den Parkbereich, der nicht weiter dargestellt ist, zum Abstellen seines Fahrzeugs nutzen möchte, fährt mit seinem Fahrzeug vor die Zufahrtschrankeneinheit 16, deren Schranke 18 in Ruhestellung die Zufahrt verweigert. Ebenfalls nicht dargestellt ist ein Detektionssystem, welches mit der Zufahrtschrankeneinheit 16 verbunden ist und die Zufahrt eines Fahrzeugs detektiert. Die Zufahrtschrankeneinheit 16 stellt automatisch eine Transpondermünze 12 über die Ausgabeeinheit 20 in Griffweite für den Nutzer 10 bereit. Dieser entnimmt die Transpondermünze 12, woraufhin die Schranke 18 der Zufahrtschrankeneinheit 16 automatisch geöffnet wird, so dass der Nutzer 10 mit seinem Fahrzeug die Zufahrtschrankeneinheit 16 passieren kann. Nach Durchfahrt wechselt die Schranke 18 automatisch wieder in ihre Ruhestellung. Die Zufahrtschrankeneinheit 16 steht nun für eine erneute Aktion in Bereitschaft.

Die Bereitstellung der Transpondermünze 12 durch die Zufahrtschrankeneinheit 16 erfolgt durch die Ausgabeeinheit 20 erst, wenn ein Fahrzeug positiv im Schrankenbereich detektiert worden ist. Hierzu wird aus einem nicht näher dargestellten Vorratsbehältnis automatisch eine Transpondermünze 12 entnommen und mittels einer Schreib-/Leseeinheit 44 mit einer Berechtigungsinformation versehen. Die Schreib-/Leseeinheit 44 stellt hierzu zur Transpondermünze 12 eine Nahfunkverbindung her, über die die Kommunikation zum Transponder 14 der Transpondermünze 12 hergestellt wird. In der vorliegenden Ausgestaltung ist vorgesehen, dass die Berechtigungsinformation einen Anlagencode, einen Betreibercode sowie einen Zeitcode umfasst. Der Zeitcode wird in binärer Form im Speicher des Transponders 14 gespeichert.

Der Nutzer 10 stellt sein Fahrzeug in einer freien Parktasche des Parkbereichs ab und begibt sich zwecks Tätigung von Einkäufen in ein nicht näher dargestelltes Kaufhaus, welchem der Parkbereich zuzurechnen ist. Er wählt im Kaufhaus die gewünschten Waren aus, die er zu kaufen beabsichtigt, und begibt sich damit zu einem Kassensystem 22 mit einer Kasse 46. Diese weist einen Scanner 24 auf, der geeignet ist, Barcodes sowie EAN-Barcodes einzuscannen. Mit dem Scanner 24 werden die Barcodes der zum Kauf vorgesehenen Waren in die Kasse eingescannt.

Direkt neben der Kasse 46 ist ein Kopplungsmodul 28 angeordnet, welches eine Schreib-/Leseeinheit 32, eine Freigabetaste 30, eine Funkschnittstelle 34 sowie eine Anzeigeeinheit 26 zur Anzeige eines EAN-Barcodes aufweist. Zu diesem Zweck ist die Anzeigeeinheit 26 als grafische Anzeigeeinheit ausgebildet.

Der Nutzer 10 legt nunmehr neben den Waren auch seine Transpondermünze 12 dem nicht näher dargestellten Kassenpersonal vor. Das Kassenpersonal bringt die Transpondermünze 12 in Kommunikationsverbindung mit der Schreib-/Leseeinheit 32 des Kopplungsmoduls 28. Diese liest die Berechtigungsinformation aus. Ein EAN-Timer ermittelt den Zeitcode in der Berechtigungsinformation und bildet eine Differenz zu der aktuellen Zeit. Die abrechnungsrelevanten Informationen, beispielsweise die Differenzzeit, werden auf der Anzeigeeinheit 26 in Form eines EAN-Barcodes angezeigt, das heißt in ein für das Kassensystem verarbeitbares Format, nämlich den EAN-Barcode, konvertiert und bereitgestellt zur Erfassung durch das Kassensystem. Das Kassenpersonal scannt mit dem Scanner 24 den auf der Anzeigeeinheit 26 angezeigten Barcode in das Kassensystem 22 ein, so dass eine Registrierung erfolgt.

Mit dem Einscannen in das Kassensystem wird die Weiterverarbeitung veranlaßt, und zwar das Hinzufügen einer Buchungsposition über die Abrechnung des Parkens im Rahmen der Abrechnung der zu kaufenden Waren durch den Nutzer. Zugleich wird die Berechtigungsinformation in einer Speichereinheit 58 gespeichert. Darauffolgend betätigt das Personal die Freigabetaste 30, woraufhin die Transpondermünze 12, die nach wie vor in Kommunikationsverbindung mit der Schreib-/Leseeinheit 32 ist, mit einem neuen Zeitcode in ihrer Berechtigungsinformation als Freigabesignal versehen wird. Der bisherige Zeitcode wird folglich überschrieben. Der Nutzer 10 erhält die Transpondermünze 12 zurück. Nachdem der Nutzer 10 seine Zahlungstransaktion abgewickelt hat, begibt er sich mit den gekauften Waren sowie der Transpondermünze 12 wieder zu seinem Fahrzeug. Das Freigabesignal ist zeitlich durch den geänderten Zeitcode befristet. Es erlaubt dem Nutzer lediglich in den folgenden 15 Minuten, den Parkbereich mit seinem Fahrzeug zu verlassen.

Um den Parkbereich zu verlassen, fährt der Nutzer 10 mit seinem Fahrzeug bis zu einer Ausfahrtschrankeneinheit 40, die ebenfalls eine Schranke 18 aufweist. Die Ruhestellung der Schranke 18 ist ebenfalls wie die der Zufahrtschrankeneinheit 16 in gesperrter Stellung. Die Ausfahrtschrankeneinheit 40 weist eine Rückgabeeinheit 42 mit einem Einwurfschlitz für eine Transpondermünze sowie eine nicht näher dargestellte Detektionsvorrichtung für ein Fahrzeug auf.

Detektiert die Detektionseinheit ein Fahrzeug, so wird der Einwurfschlitz für die Transpondermünze 12 der Rückgabeeinheit 42 freigegeben. Der Nutzer 10 kann nunmehr die Transpondermünze 12 der Rückgabeeinheit 42 zuführen. Die Rückgabeeinheit 42 weist eine Leseeinheit 54 auf, mit der die Berechtigungsinformation aus der Transpondermünze 12 ausgelesen wird. Eine mit der Leseeinheit 54 verbundene Rechnereinheit 56 prüft die Berechtigungsinformation und gibt bei gültiger Berechtigungsinformation ein Signal an die Schranke 18, die daraufhin in die geöffnete Stellung verschwenkt wird. Der Nutzer 10 kann mit seinem Fahrzeug die Ausfahrtschrankeneinheit 40 passieren und den Parkbereich verlassen. Nach Passieren der Ausfahrtschrankeneinheit 40 detektiert die Detektionseinrichtung kein Fahrzeug, woraufhin die Schranke 18 wieder in die gesperrte Stellung verschwenkt wird. Die Transpondermünze 12 wird von der Rückgabeeinheit 42 zu einer Löscheinheit 52 automatisch überführt, in der die Berechtigungsinformation gelöscht wird. Nach Löschen der Berechtigungsinformation der Transpondermünze 12 wird diese einem Behältnis 50 zur Speicherung zugeführt. Auf diese Weise ist sichergestellt, dass die Transpondermünzen 12 nicht durch Dritte unberechtigt benutzt werden können.

Zur Erhöhung der Sicherheit kann vorgesehen sein, dass neben den bisher vorgesehen Codes weitere Codes in der Berechtigungsinformation vorgesehen werden, um missbräuchliche Nutzung zu erschweren. Darüber hinaus kann auch eine Verschlüsselung vorgesehen sein.

In bestimmten vorgebbaren Zeitabständen tritt das Kopplungsmodul 28 über die Funkschnittstelle 34 in Kommunikationsverbindung mit einer Zentrale 38 und übermittelt die in der Speichereinheit 58 gespeicherten Daten.

Eine Rechnereinheit 60 steuert nicht nur die Schnittstelle 34 und die Speichereinheit 58, sondern darüber hinaus auch die Kommunikation zwischen der Schreib-/Leseeinheit 32 und der Transpondermünze 12 sowie den weiteren, in dem Kopplungsmodul 28 enthaltenen Einheiten.

Aus dem beschriebenen Beispiel ergibt sich, dass ein vorhandenes Kassensystem 22 keine Verbindung zum Parksystem benötigt. Auch hardwaremäßig ist keine Erweiterung am Kassensystem 22 vorzusehen. Insofern ist das System gemäß der vorliegenden Erfindung geeignet, mit bestehenden Kassensystemen 22 auf einfache Weise kombiniert zu werden. Seitens des Kassensystems ist ein Nummernbereich für den EAN-Barcode softwareseitig einzurichten, so daß einem eingescannten EAN-Barcode ein geldwerter Betrag zugeordnet werden kann.

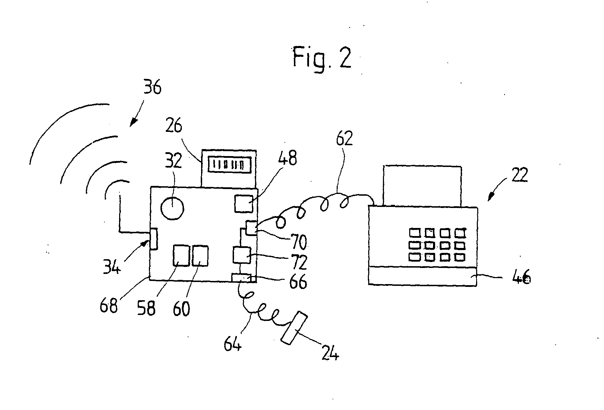

Fig. 2 zeigt eine abgewandelte Ausgestaltung gemäß Fig. 1, bei der eine automatische Erzeugung der Freigabeinformation erreicht wird. Im Unterschied zum Kopplungsmodul 28 gemäß Fig. 1 weist ein Kopplungsmodul 68 anstelle der Freigabetaste 30 des Kopplungsmoduls 28 zwei Schnittstellen 66, 70 auf. Die weiteren Baugruppen und Funktionen entsprechen der Ausführung zur Fig. 1. Das Kopplungsmodul 68 ist kommunikationstechnisch zwischen dem Scanner 24 und der Kasse 46 eingeschleift. Dazu ist der Scanner 24 mit seinem Anschlusskabel 64 mit einer Schnittstelle 66 des Kopplungsmoduls 68 verbunden. Eine Schnittstelle 70 des Kopplungsmoduls ist ferner über eine Leitung 62 mit der Kasse 46 verbunden, und zwar an der Steckverbindung, an der üblicherweise der Scanner 24 mit seinem Kabel 64 angeschlossen wird. Bezüglich der Kasse 46 und des Kassensystems 22 wird auf die Beschreibung zum Ausführungsbeispiel gemäß Fig. 1 verwiesen. Wie im Ausführungsbeispiel zur Fig. 1 wird auch hier der in der Anzeigeeinheit 26 dargestellte Barcode mit dem Scanner 24 eingescannt. Über eine in der Kopplungseinheit 68 vorgesehene, nicht näher dargestellte Verbindung wird das eingescannte Signal vom Scanner 24 direkt über die Leitungen 64, 62 zur Kasse 46 weitergeleitet. Eine Leseeinheit 72 im Kopplungsmodul 68, durch das die interne Verbindung zwischen den Schnittstellen 66 und 70 durchgeschleift ist, liest die vom Scanner 24 an die Kasse 46 übertragenen Daten mit. Sobald die Leseeinheit 72 ein Signal detektiert, welches dem in der Anzeige 26 aktuelle dargestellten Barcode entspricht, erfolgt eine Meldung, mit der die Erzeugung einer Freigabeinformation veranlasst wird. In der vorliegenden Ausgestaltung sind somit keinerlei manuelle Eingriffe mehr erforderlich, weshalb auch die Manipulationsmöglichkeit erheblich eingeschränkt ist. Der normale Einscan-Vorgang wird durch die Zwischenschaltung des Kopplungsmoduls 68 nicht behindert. In einer Abwandlung des vorherigen Ausführungsbeispiels nach Fig. 2 kann vorgesehen sein, dass das Einscannen des der Berechtigungsinformation entsprechenden EAN-Codes und die Anzeigeeinheit des Kopplungsmoduls eingespart werden kann. Die Leseeinheit 72 ist hierzu derart ausgebildet, dass sie ein Einlesen der Berechtigungsinformation in das Kassensystem bewirken kann.

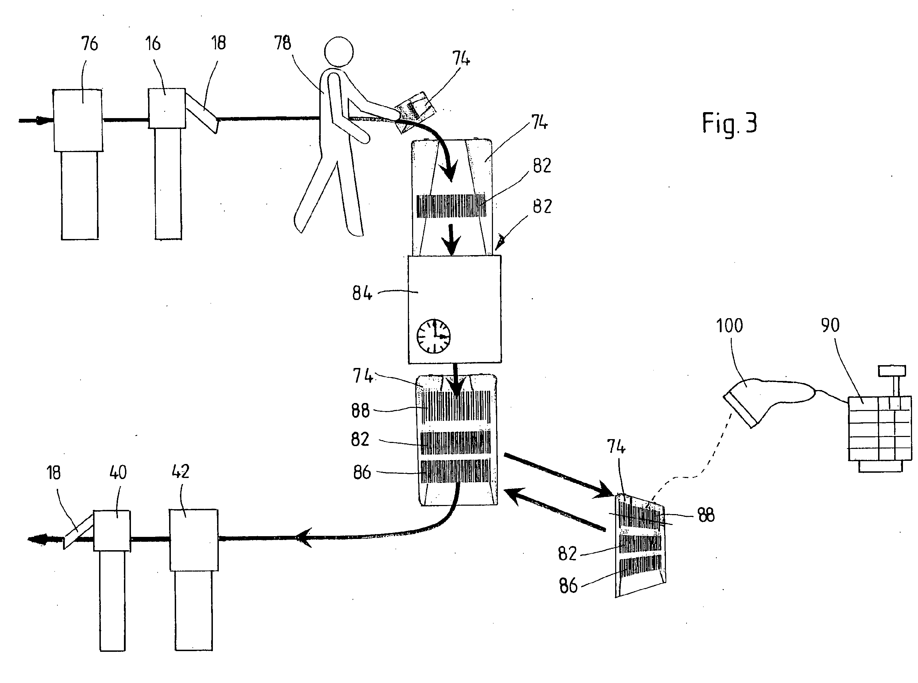

In den Figuren 3 bis 7 ist ein weiteres Ausführungsbeispiel der vorliegenden Erfindung dargestellt. Ebenso wie das in Fig. 1 beschriebene Ausführungsbeispiel befaßt sich das vorliegende Ausführungsbeispiel mit der Parkraumbewirtschaftung. Zufahrtsschrankeneinheit sowie Ausfahrtschrankeneinheit entsprechen im Prinzip den anhand von Fig. 1 beschriebenene Einheiten 16, 18, 40 und 42. Bezüglich deren Funktion wird deshalb auf das Ausführungsbeispiel zur Fig. 1 verwiesen.

Bei der Zufahrt zum nicht dargestellten Parkraum erhält ein Nutzer 78 einen Papierberechtigungsausweis 74 von einem Ausgabeautomaten 76, wobei der Berechtigungsausweis 74 bei der Ausgabe am Ausgabeautomaten 76 mit einem Einfahrtsbarcode 82 bedruckt wird. In der vorliegenden Ausgestaltung ist dem Einfahrtsbarcode 82 die Einfahrtszeit zum Parkplatz zugeordnet. Die Zufahrtsschrankeneinheit 16 öffnet dann die Schranke 18, so dass der Nutzer 78 mit seinem Fahrzeug auf den Parkplatz fahren und das Fahrzeug dort abstellen kann. Der Nutzer 78 führt seinen Papierberechtigungsausweis 74 mit und führt seine Besorgungen und Geschäfte durch.

Nach Abschluss seiner Tätigkeiten geht der Nutzer 78 zu irgendeiner autorisierten Zahlstelle mit einem Kassensystem 90, an welchem in üblicher Weise ein Scanner 100 angeordnet ist. In der vorliegenden Ausgestaltung ist der Scanner 100 ein Handapparat. Jedoch kann der Scanner auch stationär, wie beispielsweise bei Fließbandkassensystemen oder dergleichen, ausgebildet sein.

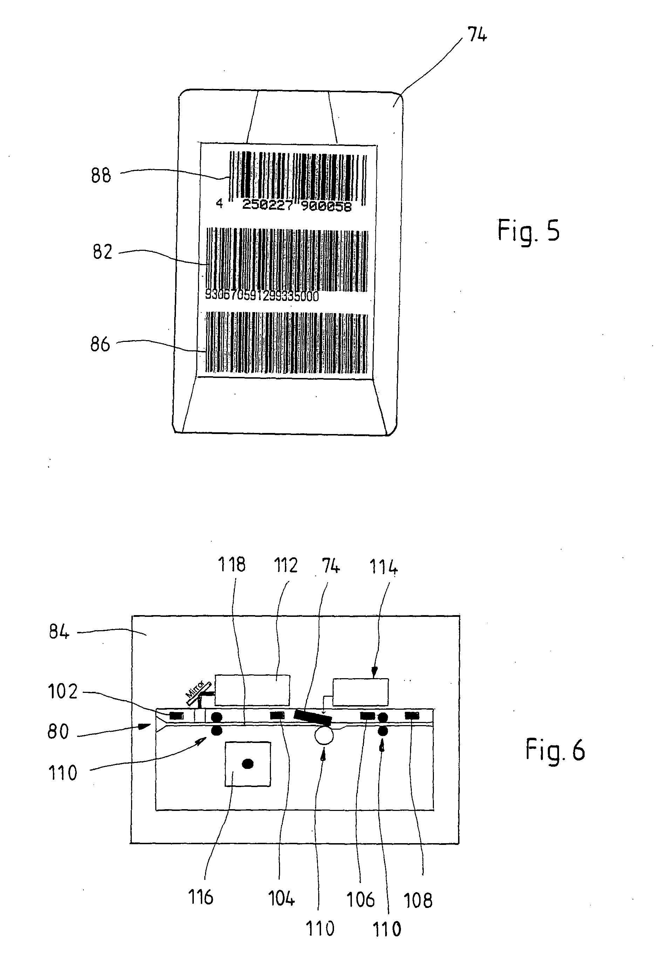

Im Bereich des Kassensystems 90 ist ein Kopplungsmodul 84 angeordnet, welches für den Papierberechtigungsausweis 74 eine Einführöffnung 80 aufweist (Fig. 6). Ein Bedienungspersonal am Kassensystem 90 übernimmt vom Nutzer 78 den Berechtigungsausweis 74 und führt diesen in die Einführöffnung 80 des Kopplungsmoduls 84 ein. Mitteils eines optischen Sensors 102 detektiert das Kopplungsmodul 84 den Einführvorgang des Papierberechtigungsausweises 74 und führt das Kopplungsmodul 84, welches sich im Ruhezustand befindet, in einen aktiven Zustand über. Mittels von einem Schrittmotor 116 angetriebener Transportwalzeneinheiten 110 wird der Papierberechtigungsausweis 74 in einen an die Einführöffnung 80 anschließenden Kanal 118 des Kopplungsmoduls 84 eingezogen. Zugleich wird eine Scannereinheit 112 des Kopplungsmoduls 84 aktiviert, welche den bisher einzigen aufgedruckten Code, nämlich den Einfahrtsbarcode 82, einscannt.

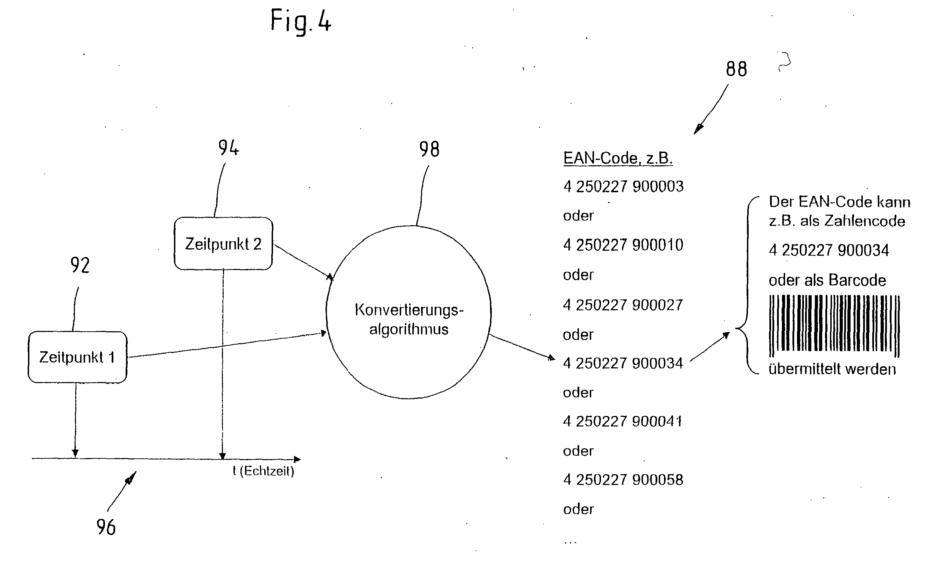

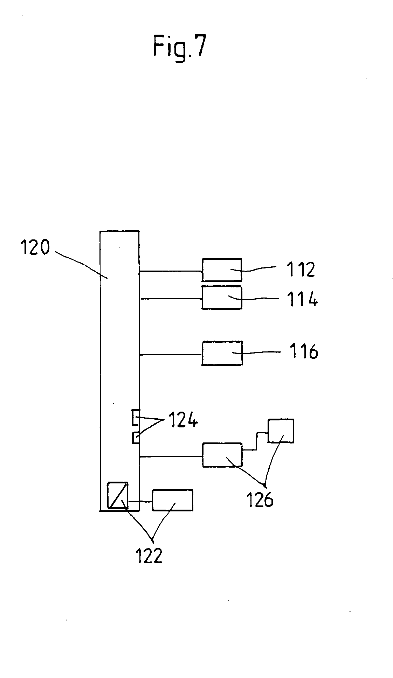

Vorliegend ist der Einfahrtsbarcode 82 repräsentativ für eine Einfahrtszeit, mit der der Nutzer 78 mit seinem Fahrzeug auf das Parkgelände eingefahren ist. Das Kopplungsmodul 84 weist eine Rechnereinheit 120 auf (Fig. 7), die sowohl mit dem Scanner 112 als auch mit dem Thermodrucker 114 sowie dem Schrittmotor 116 in Kommunikationsverbindung steht. Der Scanner 112 liefert den gelesenen Einfahrtsbarcode 82 an die Rechnereinheit 120. Hierdurch ist der Zeitpunkt 1 (Bezugszeichen 92) bestimmt, an welchem der Nutzer 78 Zutritt zum bewirtschafteten Parkbereich erhalten hat. Dargestellt ist dies in Fig. 4 auf dem Zeitstrahl 96. Die Rechnereinheit 120 verfügt darüber hinaus über eine nicht näher dargestellte Echtzeituhr, mit der ein aktueller Zeitpunkt ermittelt werden kann. Dies ist der Zeitpunkt 2 (Bezugszeichen 94). Mittels eines Konvertierungsalgorithmusses 98 wird aus dem Zeitpunkt 1 und dem Zeitpunkt 2 der EAN-Code 88 ermittelt, welcher auf den Berechtigungsausweis 74 gedruckt werden soll. Zwar kann der EAN-Code als Zahlencode bereitgestellt werden, vorliegend ist jedoch vorgesehen, dass er als Barcode verfügbar gemacht wird.

Bei Erreichen des optischen Sensors 104 ist der Einfahrtsbarcode 82 vollständig eingescannt und wird an die Rechnereinheit 120 übermittelt. Mittels der Transportwalzeneinheit 110 wird der Papierberechtigungsausweis 74 im Kanal 80 weiterbefördert. Mit dem optischen Sensor 104 kann somit die Abmessung des Papierberechtigungsausweises 74 ermittelt werden und Ausweise außerhalb einer bestimmten Toleranzgrenze erkannt werden. Bei Erkennung eines solchen Ausweises wird die Transportwalzeneinheit 110 in Gegenrichtung angetrieben, so dass der entsprechende Ausweis wieder ausgegeben wird.

Parallel zur Förderung des Papierberechtigungsausweises 74 wird mittels der Rechnereinheit 120 der EAN-Code sowie ein Ausfahrtsbarcode 86 ermittelt, die an den Thermodrucker 114 übermittelt werden. Erreicht der Papierberechtigungsausweis 74 den optischen Sensor 106, so wird ein Druckkopf des Thermodruckers 114 aktiviert und der Papierberechtigungsausweis 74 sowohl mit dem EAN-Code 88 als auch mit dem Ausfahrtsbarcode 86 bedruckt. Nach Erreichen des optischen Sensors 108 wird die Transportwalzeneinheit 110 in ihrer Antriebsrichtung umgekehrt, so dass der Papierberechtigungsausweis 74 durch den Kanal 118 zurück zur Einführöffnung 80 gefördert wird. Der Papierberechtigungsausweis 74 kann nunmehr dem Kopplungsmodul 84 entnommen werden. Dieser weist nun einen Aufdruck auf, wie er in Fig. 5 dargestellt ist. Durch das Kopplungsmodul 84 sind zwei weitere Barcodes hinzugefügt worden, nämlich der EAN-Barcode 88 und der Ausfahrtsbarcode 86. Einen schematischen Schaltplan des Kopplungsmoduls 84 zeigt Fig. 7. Die Rechnereinheit 120 wird mittels einer Energieversorgungseinheit 122 mit elektrischer Energie aus einem nicht näher dargestellten öffentlichen Energieversorgungsnetz versorgt. Ferner ist ersichtlich, daß die Rechnereinheit 120 mit dem Thermodrucker 114, dem Scanner 112 sowie mit dem Schrittmotor 116 in Kommunikationsverbindung steht. Ferner weist die Rechnereinheit 120 einen Steuerbereich 124 auf, über den mittels einer Anschlußbelegung vorgebbare Funktionen einstellbar sind. Weiterhin ist eine Schnittstelleneinheit 126 vorgesehen, die es erlaubt, die Rechnereinheit 120 von extern zu programmieren und Daten abzufragen.

Das Kassenpersonal scannt nun den Papierberechtigungsausweis 74 mit dem Scanner 100 des Kassensystems 90 ab. In der vorliegenden Ausgestaltung kann vom Kassensystem 90 nur der EAN-Barcode 88 vom Berechtigungsausweis 74 gelesen werden. Die weiteren Barcodes 82, 86 werden vom Kassensystem 90 ignoriert, weil sie auf einen für das Kassensystem 90 unbekannten Codierung basieren. Das Kassensystem 90 fügt nun bei der Abrechnung eine Buchungsposition gemäß dem EAN-Barcode 88 auf der Rechnung hinzu. Die Bezahlung erfolgt durch den Nutzer 78 am Kassensystem 90.

Der Nutzer 78 erhält vom Kassenpersonal den Papierberechtigungsausweis 74 zurück und begibt sich zu seinem Fahrzeug im Parkbereich. Im Bereich der Ausfahrt ist wiederum eine Rückgabeeinheit 42 vorgesehen, die einen nicht näher bezeichneten Eingabeschlitz für den Papierberechtigungsausweis 74 aufweist. In diesen gibt der Nutzer 78 den Papierberechtigungsausweis 74 ein. In bekannter Weise prüft die Rückgabeeinheit 42 den Ausfahrtsbarcode 86 und gibt bei Gültigkeit des Ausfahrtsbarcodes 86 ein Signal an die Ausfahrtsschrankeneinheit 40, die daraufhin die Schranke 18 für die Ausfahrt öffnet. Nach Passieren des Fahrzeugs schließt die Schranke 18 automatisch wieder. Der EAN-Barcode 88 wird wegen des unterschiedlichen Codierungsformats ignoriert. Die Rückgabeeinheit 42 liest zwar sowohl den Einfahrtsbarcode 82 als auch den Ausfahrtsbarcode 86, sie reagiert jedoch nur auf den zeitlich jüngeren Ausfahrtsbarcode 86. Solange eine vorgebbare Karenzzeit für die Ausfahrt noch nicht abgelaufen ist, wird die Ausfahrt freigegeben.

Wie aus der Beschreibung zum letztgenannten Ausführungsbeispiel ersichtlich ist, ist keinerlei Eingriff in das bestehende Kassensystem 90 erforderlich. Einzig die Verwendung des Kopplungsmoduls 84 erlaubt es, ein vorhandenes Kassensystem 90 für die Parkraumbewirtschaftung zusätzlich zu ertüchtigen beziehungsweise nachzurüsten.

Natürlich kann der Betrieb des Parkbereiches auch durch weitere Kassenautomaten als Zahlstellen ergänzt werden und beispielsweise in einem Mischbetrieb genutzt werden. Der Barcode kann sowohl ein eindimensionaler als auch ein zweidimensionaler Barcode sein. Ein weiterer Vorteil des Systems zeigt sich darin, dass alle für die Bewirtschaftung des Parkbereichs erforderlichen zusätzlichen Einheiten zur Realisierung des erfindungsgemäßen Verfahrens als sogenannte "Stand-alone-Geräte" vorgesehen sein können. Dies reduziert den Aufwand für ein System, welches das erfindungsgemäße Verfahren nutzt. Darüber hinaus kann eine hohe Zuverlässigkeit und Sicherheit erreicht werden.

Auch erlaubt die vorliegende Erfindung eine Vielzahl von Variationen, um individuelle Sonderfunktionen zu realisieren. So kann beispielsweise bei der Parkraumbewirtschaftung vorgesehen sein, daß beliebige Nutzer ein vorgebbares Zeitkontingent frei erhalten und erst nach Ablauf der Freiparkzeit Gebühren anfallen. Dadurch, daß die Ausfahrtschrankeneinheit sowohl den Einfahrtsbarcode 82 als auch den Ausfahrtsbarcode 86 liest, und nur den jüngsten Barcode berücksichtigt, kann erreicht werden, daß bei Fehlen des Ausfahrtsbarcode 86 lediglich der Einfahrtsbarcode 82 ausgewertet wird. Solange die Freiparkzeit noch nicht abgelaufen ist, wird die Ausfahrt freigegeben. Bei abgelaufener Freiparkzeit ist gemäß dem vorbeschriebenen Verfahren eine Entgeltentrichtung und Aufdruck eines Ausfahrtsbarcodes erforderlich.

Darüber hinaus können natürlich auch Dauerausweise vorgesehen sein, deren Gültigkeit unbegrenzt oder deren Gültigkeit datumsmäßig begrenzt sein kann. So kann beispielsweise eine Gültigkeit von einem Tag, einer Woche, einem Monat oder dergleichen vorgesehen sein.

Das vorliegende Ausführungsbeispiel ist für die Erfindung nicht beschränkend. Insbesondere können die Berechtigungseinheiten sowie auch die Anwendung auf unterschiedliche Leistungen, die beispielsweise keine Bewirtschaftung von Parkbereichen sind, variieren, ohne den Schutzbereich der vorliegenden Erfindung zu verlassen.

### Bezugszeichen:

- 10: Nutzer
- 12: Transpondermünze
- 14: Transponder
- 16: Zufahrtschrankeneinheit
- 18: Schranke
- 20: Ausgabeeinheit
- 22: Kassensystem
- 24: Scanner
- 26: Anzeigeeinheit
- 28: Kopplungsmodul
- 30: Freigabetaste
- 32: Schreib-/Leseeinheit
- 34: Funkschnittstelle
- 36: Kommunikationsverbindung
- 38: Zentrale
- 40: Ausfahrtschrankeneinheit
- 42: Rückgabeeinheit
- 44: Schreib-/Leseeinheit
- 46: Kasse
- 48: EAN-Timer
- 50: Behältnis
- 52: Löscheinheit
- 54: Leseeinheit
- 56: Rechnereinheit
- 58: Speichereinheit
- 60: Rechnereinheit
- 62: Leitung
- 64: Leitung
- 66: Schnittstelle
- 68: Kopplungsmodul
- 70: Schnittstelle
- 72: Leseeinheit
- 74: Papierberechtigungsausweis
- 76: Ausgabeautomat
- 78: Nutzer
- 80: Einführöffnung
- 82: Einfahrtsbarcode
- 84: Kopplungsmodul
- 86: Ausfahrtsbarcode
- 88: EAN-Barcode
- 90: Kassensystem
- 92: Zeitpunkt 1
- 94: Zeitpunkt 2
- 96: Zeitstrahl
- 98: Konvertierungsalgorithmus
- 100: Scanner
- 102: optischer Sensor
- 104: optischer Sensor
- 106: optischer Sensor
- 108: optischer Sensor
- 110: Transponderwalzeneinheit
- 112: Scannereinheit
- 114: Thermodrucker
- 116: Schrittmotor
- 118: Kanal
- 120: Rechnereinheit
- 122: Energieversorgungseinheit
- 124: Steuerbereich
- 126: Schnittstelleneinheit

## Patentansprüche

1. Verfahren zur Abrechnung bereitgestellter Leistungen, wobei zu Beginn der Bereitstellung eine tragbare Berechtigungseinheit mit einer elektronisch erfaßbaren Berechtigungsinformation erstellt und ausgegeben wird, die Berechtigungsinformation im Bereich einer Kasse zur Abwicklung von Zahlungstransaktionen aus der Berechtigungseinheit gelesen, in ein für das Kassensystem verarbeitbares Format konvertiert und zur Weiterverarbeitung durch das Kassensystem bereitgestellt wird.

2. Verfahren nach Anspruch 1, **dadurch gekennzeichnet, dass** die Berechtigungseinheit bei Übergabe an den Nutzer mit der Berechtigungsinformation versehen wird.

3. Verfahren nach einem der Ansprüche 1 oder 2, **dadurch gekennzeichnet, dass** zum Erzeugen der Freigabeinformation die Berechtigungsinformation geändert, gelöscht und/oder eine weitere Information hinzugefügt wird.

4. Verfahren nach einem der Ansprüche 1 bis 3, **dadurch gekennzeichnet, dass** die Freigabeinformation durch an einen Quittungsdrucker der Kasse gesandte Daten erzeugt wird.

5. Verfahren nach einem der Ansprüche 1 bis 4, **dadurch gekennzeichnet, dass** die Freigabeinformation durch Detektieren des Einlesens in das Kassensystem erzeugt wird.

6. Verfahren nach Anspruch 1 bis 5, **dadurch gekennzeichnet, dass** die Berechtigungsinformation und/oder die geänderte Berechtigungsinformation gespeichert werden.

7. Verfahren nach einem der Ansprüche 1 bis 6, **dadurch gekennzeichnet, dass** die Berechtigungsinformation eine Betreiberkennung, eine Anlagenkennung, einen Abrechnungscode und/oder einen oder mehrere Zeitcodes umfasst.

8. Verfahren nach einem der Ansprüche 1 bis 7, **dadurch gekennzeichnet, dass** die Bereitstellung der Leistung mit der Übergabe der Berechtigungseinheit an den Nutzer aktiviert wird.

9. Verfahren nach einem der Ansprüche 1 bis 8, **dadurch gekennzeichnet, dass** die Berechtigungsinformation als Barcode angezeigt und/oder ausgedruckt wird.

10. Verfahren nach einem der Ansprüche 1 bis 8, **dadurch gekennzeichnet, dass** als Berechtigungsinformation ein alphanumerischer Code und/oder ein Barcode auf den Berechtigungsausweis gedruckt wird.

11. Verfahren nach einem der Ansprüche 1 bis 9, **dadurch gekennzeichnet, dass** die Berechtigungsinformation manuell geändert wird.

12. Verfahren nach einem der Ansprüche 1 bis 10, **dadurch gekennzeichnet, dass** die Berechtigungsinformation automatisch geändert wird.

13. Verfahren nach einem der Ansprüche 1 bis 11, **dadurch gekennzeichnet, dass** das Ändern der Berechtigungsinformation ein Ändern des Zeitcodes umfasst.

14. Verfahren nach einem der Ansprüche 1 bis 8, **dadurch gekennzeichnet, dass** die geänderte Berechtigungsinformation als alphanumerischer Code und/oder als Barcode auf den Berechtigungsausweis gedruckt wird.

15. Verfahren nach einem der Ansprüche 1 bis 8, **dadurch gekennzeichnet, dass** für den alphanumerischen Code und/oder den Barcode sowie für den geänderten alphanumerischen Code und/oder Barcode gleiche und/oder unterschiedliche Codierungen verwendet werden.

16. Verfahren nach einem der Ansprüche 1 bis 12, **dadurch gekennzeichnet, dass** als Leistung eine Parkberechtigung verwendet wird.

17. Verfahren nach einem der Ansprüche 1 bis 13, **dadurch gekennzeichnet, dass** das Ändern der Berechtigungsinformation durch das Kassensystem veranlasst wird.

18. Verfahren nach einem der Ansprüche 1 bis 14, **dadurch gekennzeichnet, dass** die angezeigte Berechtigungsinformation mittels eines Scanners in das Kassensystem eingelesen wird.

19. Verfahren nach einem der Ansprüche 1 bis 15, **dadurch gekennzeichnet, dass** die Berechtigungsinformation mittels einer RFID-Einheit in das Kassensystem eingelesen wird.

20. Verfahren nach einem der Ansprüche 1 bis 16, **dadurch gekennzeichnet, dass** die geänderte Berechtigungsinformation eine Freigabe und/oder einen Bonus für die Bereitstellung der Leistung umfasst.

21. Verfahren nach einem der Ansprüche 1 bis 17, **dadurch gekennzeichnet, dass** die Bereitstellung der Leistung in zeitlichem Zusammenhang mit Beendigung der Bereitstellung abgerechnet wird.

22. Verfahren nach einem der Ansprüche 1 bis 18, **dadurch gekennzeichnet, dass** die Berechtigungseinheit nach Beendigung der Bereitstellung der Leistung vom Nutzer zurückgegeben wird.

23. Vorrichtung zum Ändern der Berechtigungsinformation einer Berechtigungseinheit mit einer Schreib-/Leseeinheit, einer Erfassungseinheit für die Berechtigungsinformation, einer Kommunikationseinheit sowie einer Änderungseinheit.

24. Vorrichtung nach Anspruch 20, **dadurch gekennzeichnet, dass** die Kommunikationseinheit eine Anzeigeeinheit aufweist.

25. Vorrichtung nach Anspruch 20 oder 21, **dadurch gekennzeichnet, dass** das Kassensystem einen Scanner aufweist.

26. Vorrichtung nach einem der Ansprüche 20 bis 22, **gekennzeichnet durch** eine Zeituhr.

27. Vorrichtung nach einem der Ansprüche 20 bis 23, **gekennzeichnet durch** eine Betätigungseinheit.

28. Vorrichtung nach einem der Ansprüche 20 bis 24, **gekennzeichnet durch** eine Speichereinheit.

29. Vorrichtung nach einem der Ansprüche 20 bis 25, **gekennzeichnet durch** eine Kommunikationsschnittstelle.

30. Vorrichtung nach einem der Ansprüche 20 bis 26, **gekennzeichnet durch** einen EAN-Timer.

31. Vorrichtung nach einem der Ansprüche 20 bis 27, **gekennzeichnet durch** einen Sensor zur Detektion des Einlesens der Berechtigungsinformation in das Kassensystem.

32. Vorrichtung nach einem der Ansprüche 20 bis 28, **dadurch gekennzeichnet, dass** die Vorrichtung kommunikationstechnisch zwischen dem Scanner und der Kasse angeordnet ist.

33. Vorrichtung nach einem der Ansprüche 20 bis 29, **gekennzeichnet durch** eine Transporteinheit.

34. Vorrichtung nach Anspruch 30, **dadurch gekennzeichnet, dass** die Transporteinheit einen Positionssensor aufweist.

35. Vorrichtung nach einem der Ansprüche 20 bis 31, **gekennzeichnet durch** eine Druckeinheit.

36. Vorrichtung nach einem der Ansprüche 20 bis 32, **gekennzeichnet durch** eine Energieversorgungseinheit.

37. Vorrichtung nach einem der Ansprüche 20 bis 33, **gekennzeichnet durch** eine Rechnereinheit.
